# EUROPEAN PATENT APPLICATION

(11) **EP 3 125 514 A1**
(43) Date of publication of application: **01.02.2017**
(21) Application number: 16164351.5
(22) Date of filing: 08.04.2016
(51) Int. Cl.: H04M 3/42

(54) **METHOD AND DEVICE FOR STATE NOTIFICATION**

(30) Priority: 27.07.2015 CN 201510447091
(71) Applicant: Xiaomi Inc., Beijing 100085 (CN)
(72) Inventor: LI, Shen, Beijing 100085 (CN); SUN, Dayu, Beijing 100085 (CN); CHEN, Chao, Beijing 100085 (CN)
(74) Representative: Delumeau, François Guy

(57) **Abstract**

The present disclosure relates to a method and device for state notification. The method comprising: acquiring (S11a, S11b) current state information about a user of a terminal according to calendar events from a wearable device; notifying (S12a, S12b) a predetermined contact of the user of the current state information. With the technical solution, current state information about a user is notified to a predetermined contact when the user is not convenient to answer a telephone or reply to a message such that the predetermined contact can know reasons of no answer or no reply from the user or the user's state before contacting the user, so as to determine whether to contact the user according to the user's current state. As such, communications between users becomes more unblocked, and thus the efficiency of the communications can be improved and better user experience can be obtained. Generate ring back tone RBT corresponding to the current state.

## Description

### FIELD

The present disclosure generally relates to the field of wireless communication technology, and more particularly, to a method and device for state notification.

### BACKGROUND

Currently, when a user is in a meeting, in class, in sleeping and so on, the user is not convenient to answer a telephone or reply to a message and to notify the caller of his/her own current state, which easily makes communication difficult.

### SUMMARY

Embodiments of the present disclosure provide a method and device for state notification. The technical solutions are as follows.

According to a first aspect, the invention relates to a method for state notification, which is applied in a terminal, the method comprising: acquiring current state information about a user of the terminal; and notifying a predetermined contact of the user of the current state information.

In one embodiment, said step of acquiring the current state information comprises: determining whether any setting for the current state information about the user exists; and acquiring the current state information about the user according to a setting when the setting exists.

In one embodiment, said step of acquiring the current state information comprises: detecting calendar events of the user; and determining the current state information about the user according to the calendar events.

In one embodiment, said step of acquiring the current state information comprises: acquiring the current state information about the user from an intelligent wearable device which is bound to the terminal.

In one embodiment, said step of acquiring the current state information comprises: acquiring first current state information set by the user; detecting calendar events of the user to determine second current state information about the user, or detecting second current state information about the user from an intelligent wearable device; comparing the second current state information with the first current state information; and determining the second current state information as the current state information about the user when the second current state information does not match the first current state information.

In one embodiment, said step of notifying the current state information comprises: generating a ring-back tone corresponding to the current state information about the user; and playing the ring-back tone when a call from the predetermined contact is received.

In one embodiment, said step of generating the ring-back tone comprises: collecting voice information including the current state information about the user, and determining the voice information as the ring-back tone corresponding to the current state information about the user.

In one embodiment, said step of generating the ring-back tone comprises: searching a predetermined ring-back tone corresponding to the current state information about the user, and determining the predetermined ring-back tone as the ring-back tone corresponding to the current state information about the user.

In one embodiment, said step of notifying the current state information comprises: transmitting the current state information to a terminal of the predetermined contact which marks current state of the user according to the current state information.

According to a second aspect, the invention relates to a device for state notification in a terminal, comprising: an acquisition module configured to acquire current state information about a user of the terminal; and a notification module configured to notify a predetermined contact of the user of the current state information.

In one embodiment, the acquisition module comprises: a determination sub-module configured to determine whether any setting for the current state information about the user exists; and a first acquisition sub-module configured to acquire the current state information about the user according to a setting when the setting exists.

In one embodiment, the acquisition module comprises: a first detection sub-module configured to detect calendar events of the user; and a first determination sub-module configured to determine the current state information about the user according to the calendar events.

In one embodiment, the acquisition module comprises: a second acquisition sub-module configured to acquire the current state information about the user from an intelligent wearable device which is bound to the terminal.

In one embodiment, the acquisition module comprises: a third acquisition sub-module configured to acquire first current state information set by the user; a second detection sub-module acquire detect calendar events of the user to determine second current state information about the user, or configured to detect the second current state information about the user from an intelligent wearable device; a comparison sub-module configured to compare the second current state information with the first current state information; and a second determination sub-module configured to determine the second current state information as the current state information about the user when the second current state information does not match the first current state information.

In one embodiment, the notification module comprises: a generation sub-module configured to generate a ring-back tone corresponding to the current state information about the user; and a playing sub-module configured to play the ring-back tone when a call from the predetermined contact is received.

In one embodiment, the generation sub-module is configured to collect voice information including current state information about the user and to determine the voice information as the ring-back tone corresponding to the current state information about the user.

In one embodiment, the generation sub-module is configured to search a predetermined ring-back tone corresponding to the current state information about the user and to determine the predetermined ring-back tone as the ring-back tone corresponding to the current state information about the user.

In one embodiment, the notification module comprising: a transmitting sub-module configured to transmit the current state information to a terminal of the predetermined contact which marks current state of the user according to the current state information.

According to a third aspect, the invention relates to a device for state notification in a terminal, comprising: a processor; a memory for storing instructions executable by the processor; wherein the processor is configured to: acquire current state information about a user of the terminal; and notify a predetermined contact of the user of the current state information.

The technical solutions provided by embodiments of the present disclosure may include the following beneficial effects.

In the above technical solutions, the current state of the terminal user may be a state in the case of which the user is not convenient to answer the telephone or reply to the messages. By notifying the predetermined contact of the current state information about the user, the predetermined contact can know the reason of no answer or no reply, or the predetermined contact can acquire the user's state before contacting the user, so as to select whether to contact the user according to the user's current state. As such, the communications between the users becomes more unblocked, improving the efficiency of the communications and leading to better user experience.

In alternative solutions, the terminal provides a function for setting the user state, by which the user can set its own current state manually. If the terminal determines that the user has the operation of setting the current state, then acquire the current state information about a user according to the setting results. By setting its own current state, the user can notify the predetermined contact timely when the user is not convenient to answer the telephone or reply to the messages, so as to ensure the communication between the users to be unblocked and improve the user experience.

In alternative solutions, the current state of a user can further be determined according to the calendar events without the user setting its own state actively, so as to acquire the user state more flexible, conveniently, quickly and accurately and to notify the predetermined contact timely when the user is not convenient to answer the telephone or reply to the messages, ensuring the communication between the users to be unblocked and improving the user experience.

In alternative solutions, detecting the current state of the user in real time by an intelligent wearable device enables to acquire the user state more accurately and notify the predetermined contact timely when the user is not convenient to answer the telephone or reply to the messages, so as to ensure the communication between the users to be unblocked and improve the user experience.

In alternative solutions, filtering the acquired different current state information about the user enables the acquired current state of the user to be more accurate and to conform with the actual state of the user, so as to notify the predetermined contact timely when the user is not convenient to answer the telephone or reply to the messages, ensuring the communication between the users to be unblocked and improving the user experience.

In alternative solutions, the terminal play the ring-back tone corresponding to the current state of the user when a call from the predetermined contact is received, so that the predetermined contact may know the current state of the user after listening to the ring-back tone and may know the reason of no answer, so as to ensure the communication between the users to be unblocked and improve the user experience.

In alternative solutions, the user can explain its own current state and record it. The user can determine the voice information acquired by recording as the ring-back tone corresponding to the current state information about the user, or can select the default ringtone corresponding to the current state as the ring-back tone corresponding to the current state information about the user. As such, the predetermined contact may know the current state of the user after listening to the ring-back tone and may know the reason of no answer, so as to ensure the communication between the users to be unblocked and improve the user experience.

In alternative solutions, the terminal can push the current state information about the user to the terminal of the predetermined contact, and the terminal of the predetermined contact can mark the current state of the user at the location of the user in the contact list, so that the predetermined contact can acquire the user's state before contacting the user, so as to select whether to contact the user according to the current state of the user. As such, the communications between the users becomes more unblocked, improving the efficiency of the communications and leading to better user experience.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart showing a method for state notification according to an exemplary embodiment.
Fig. 1B is a flow chart showing a method for state notification according to another exemplary embodiment.
Fig. 2 is a flow chart showing a method for acquiring current state information about a user of a terminal, according to an exemplary embodiment.
Fig. 3 is a flow chart showing a method for acquiring the current state information about a user of a terminal according to another exemplary embodiment.
Fig. 4 is a flow chart showing a method for acquiring the current state information about a user of a terminal according to another exemplary embodiment.
Fig. 5 is a flow chart showing a method for notifying a predetermined contact of the user of the current state information according to an exemplary embodiment.
Fig. 6 is a flow chart showing a method for generating a ring-back tone corresponding to the current state information about the user according to an exemplary embodiment.
Fig. 7 is a flow chart showing a method for generating a ring-back tone corresponding to the current state information about the user according to another exemplary embodiment.
Fig. 8 is a schematic diagram showing the current state of the user marked by the predetermined contact, according to an exemplary embodiment.
Fig. 9 is a block diagram showing a device for state notification according to an exemplary embodiment.
Fig. 10 is a block diagram showing an acquisition module according to an exemplary embodiment.
Fig. 11 is a block diagram showing an acquisition module according to another exemplary embodiment.
Fig. 12 is a block diagram showing an acquisition module according to another exemplary embodiment.
Fig. 13 is a block diagram showing an acquisition module according to another exemplary embodiment.
Fig. 14 is a block diagram showing a notification module according to an exemplary embodiment.
Fig. 15 is a block diagram showing a notification module according to another exemplary embodiment.
Fig. 16 is a block diagram showing a device for video control according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

The technical solutions provided by embodiments of the present disclosure relate to a terminal having communication capability. The terminal can notify a predetermined contact of current state of its user, such as in a meeting, in class, in sleeping, in exercise, in a plane and so on, in the case of which the user is not convenient to answer a telephone or reply to a message and the like such that the contact get the current status of the user and can determine whether to contact the user according to the user's state. This can improve efficiency of communications between users, and can improve user experience.

The terminal may be a device having communication capability, such as a mobile phone, a computer, a digital broadcast terminal, a messaging device, a gaming console, a tablet, a medical device, an exercise equipment, a personal digital assistant, and the like.

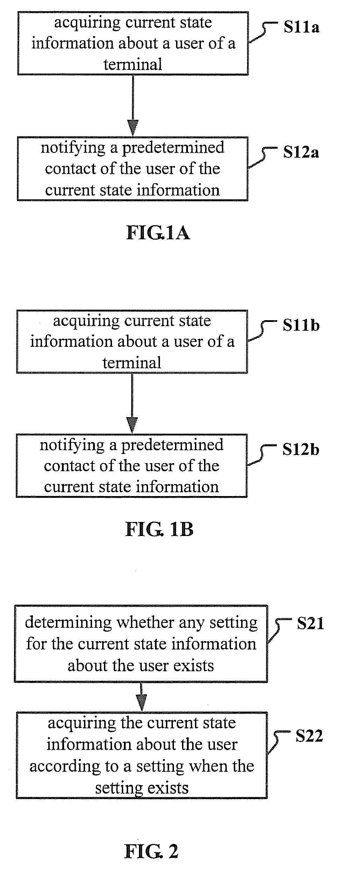

Fig. 1A is a flow chart showing a method for state notification according to an exemplary embodiment. As shown in Fig. 1A, the method for state notification is used in a terminal, and may include the following steps.

In step S11a, acquiring the current state information about a user of a terminal.

In step S12a, notifying a predetermined contact of the user of the current state information.

In the present embodiment, a terminal user may be in a state where the user is not convenient to answer a telephone or reply to a message. By notifying a predetermined contact of the current state information about the user, the predetermined contact can know reasons of no answer or no reply from the user or acquire the user's state before contacting the user so as to determine whether to contact the user according to the user's current state. As such, communications between users becomes more unblocked, and thus efficiency of the communications between the users can be improved and better user experience can be obtained.

Fig. 1B is a flow chart showing a method for state notification according to another exemplary embodiment. As shown in Fig. 1B, the method for state notification may include the following steps.

In step S11b, acquiring the current state information about a user of a terminal.

In step S12b, notifying a predetermined contact of the user of the current state information.

For acquiring the current state information about a user of a terminal in step S11b, the following methods may be implemented, but the present disclosure is not limited to the following methods.

### Method 1

Fig. 2 is a flow chart showing a method for acquiring current state information about a user of a terminal according to an exemplary embodiment. As shown in Fig. 2, the step S11 may include the following steps.

In step S21, determining whether any setting for the current state information about the user exists.

In step S22, acquiring the current state information about the user according to a setting when the setting exists.

In an alternative solution, the terminal may be provided with a function of setting user state, by which the user can set his/her own current state manually. If the terminal determines that the user has performed an operation of setting current state, the terminal can acquire the current state information about the user according to the setting. By setting his/her own current state, a predetermined contact can be notified timely when the user is not convenient to answer a telephone or reply to a message, which ensures communications between users to be unblocked and thus user experience may be improved.

### Method 2

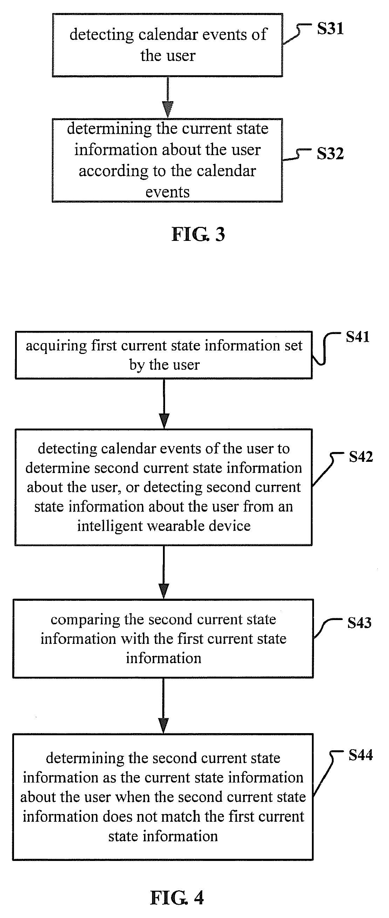

Fig. 3 is a flow chart showing a method for acquiring current state information about a user of a terminal according to another exemplary embodiment. As shown in Fig. 3, the step S11 may include the following steps.

In step S31, detecting calendar events of the user.

In step S32, determining the current state information about the user according to the calendar events.

For example, according to calendar of the user, it can be known that the user is to attend a meeting during 9:00-12:00 on July 23, 2015, then the terminal can determine that state of the user during 9:00-12:00 on July 23, 2015 is in a meeting. Or according to calendar of the user, it can be known that the user is to fly to Chengdu from Beijing by air during 10:00-12:40 on July 24, 2015, then the terminal can determine that state of the user during 9:00-12:00 on July 23, 2015 is in a plane.

In an alternative solution, current state of a user may be further determined according to calendar events without the user setting his/her own state actively, which assists acquisition of a user's state more flexibly, conveniently, quickly and accurately and ensures t communications between users to be unblocked by notifying a predetermined contact timely when the user is not convenient to answer a telephone or reply to a message and thus user experience can be improved.

### Method 3

The step S11 may include: acquiring current state information about the user from an intelligent wearable device which is bound to the terminal.

For example, the terminal automatically changes the current state information about the user to be sleeping when identifying by way of an intelligent wearable device that the user is sleeping currently. Or, the terminal changes the current state information about the user to be in exercise when identifying by way of an intelligent wearable device that the user is running currently.

In an alternative solution, by detecting current state of the user in real time by way of an intelligent wearable device, it is possible to acquire a user state more accurately and thus a predetermined contact can be notified timely when the user is not convenient to answer a telephone or reply to a message such that communications between users can be ensured to be unblocked and user experience can be improved.

### Method 4

Fig. 4 is a flow chart showing a method for acquiring the current state information about a user of a terminal according to another exemplary embodiment. As shown in Fig. 4, the step S11 may include the following steps.

In step S41, acquiring first current state information set by the user.

In step S42, detecting calendar events of the user to determine second current state information about the user, or detecting second current state information about the user from an intelligent wearable device.

In step S43, comparing the second current state information with the first current state information.

In step S44, determining the second current state information as the current state information about the user when the second current state information does not match the first current state information.

With the above described methods 1-3, the terminal can acquire at least two different user states. A priority may be set for preferably employing the user's current state determined by using the user's calendar events or that detected by an intelligent wearable device. For example, in a case that where the user's state is set as in normal during 9:00-12:00 on July 23, 2015, indicating the user can answer a telephone or reply to a message, if the terminal finds that the user will fly to Chengdu by air during 10:00-12:40 on July 23, 2015 according calendar events, then the terminal can change the current state information about the user to be in a plane. Or, in a case that where the user's state is set as in normal, if the user's current state is detected by an intelligent wearable device to be in exercise, then the terminal can automatically changes the current state information about the user to be in exercise.

In an alternative solution, by selecting among acquired different current state information about the user, more accurate current state of the user can be acquired and conform with actual state of the user well such that a predetermined contact can be notified timely when the user is not convenient to answer a telephone or reply to a message, which ensures communications between users to be unblocked and user experience can be improved.

In addition, a priority may be set for the current states of the user acquired by the above three methods. The priority indicates which method is preferably to be used for acquiring the current state of the user when the current states of the user acquired by the three methods are different. For example, the setting of the priority may be that the user's current state detected by an intelligent wearable device using the third method is firstly preferable, the user's current state determined according to calendar events using the second method is secondly preferable, and the user's current state set by the user using the first method is lastly preferable. In one embodiment, notifying a predetermined contact of the user of the current state information in step S12b may be implemented by but not limited to the following methods:

### Method A

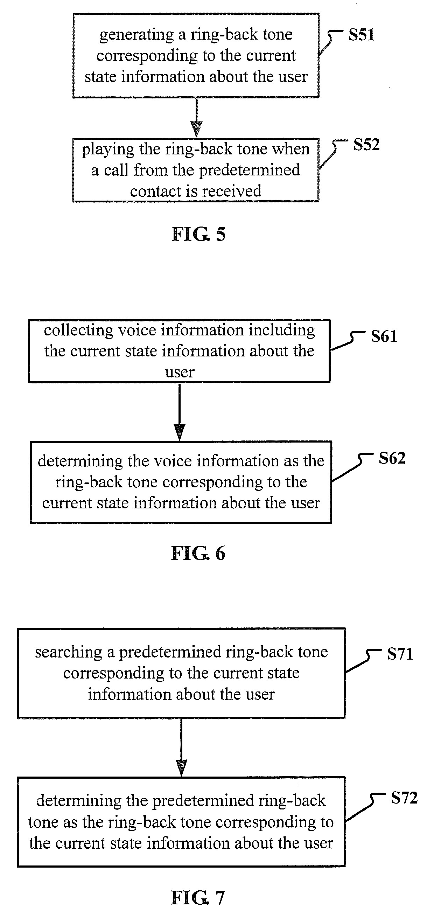

Fig. 5 is a flow chart showing a method for notifying the predetermined contact of the user of the current state information according to an exemplary embodiment. As shown in Fig. 5, the step S12 may include the following steps.

In step S51, generating a ring-back tone corresponding to the current state information about the user.

In step S52, playing the ring-back tone when a call from the predetermined contact is received.

In an alternative solution, the terminal plays the ring-back tone corresponding to the current state of the user when a call from the predetermined contact is received, so that the predetermined contact can know the current state of the user and reasons of no answer from the user, upon listening to the ring-back tone, which ensures communications between users to be unblocked and thus user experience can be improved.

In one embodiment, generating a ring-back tone corresponding to the current state information about the user in step S51 may be implemented by recording or selecting a default ring tone corresponding to the current state.

Fig. 6 is a flow chart showing a method for generating a ring-back tone corresponding to the current state information about the user according to an exemplary embodiment. As shown in Fig. 6, the step S51 may include the following steps.

In step S61, collecting voice information including the current state information about the user.

In step S62, determining the voice information as the ring-back tone corresponding to the current state information about the user.

Fig. 7 is a flow chart showing a method for generating a ring-back tone corresponding to the current state information about the user according to another exemplary embodiment. As shown in Fig. 7, the step S51 may include:
In step S71, searching a predetermined ring-back tone corresponding to the current state information about the user.
In step S72, determining the predetermined ring-back tone as the ring-back tone corresponding to the current state information about the user.

In an alternative solution, the user can describe his/her own current state and make a record, and uses voice information acquired by recording as the ring-back tone corresponding to the current state information about the user. Or, the user can select a default ring tone for the current state as the ring-back tone corresponding to the current state information about the user. As such, the predetermined contact can know the current state of the user upon listening to the ring-back tone and know reasons of no answer from the user, which ensures communications between users to be unblocked and user experience can be improved.

### Method B

In one embodiment, the step S12 may include: transmit the current state information to a terminal of the predetermined contact which marks current state of the user according to the current state information.

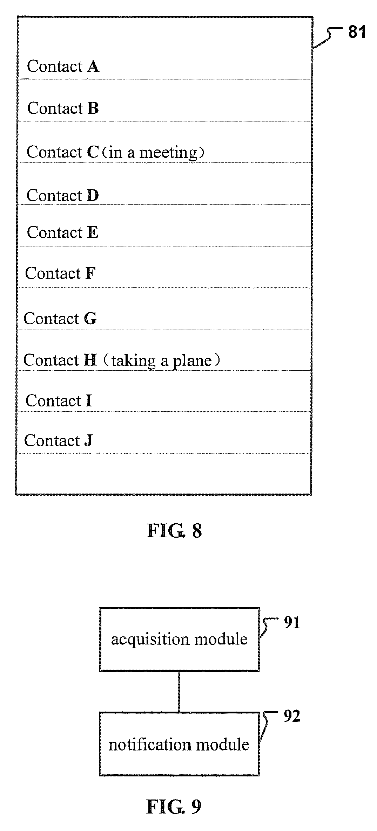

Fig. 8 is a schematic diagram showing the current state of the user marked by the predetermined contact according to an exemplary embodiment. As shown in Fig. 8, in the contact list 81 of the predetermined contact, current state of every contact can be marked. If the current state is in normal, it's not necessary to mark.

In an alternative solution, the terminal can push the current state information about the user to the terminal of the predetermined contact, such that the terminal of the predetermined contact can mark the current state of the user at a location of the user in the contact list and acquire the user's state before contacting the user and determines whether to contact the user according to the current state of the user. As such, communications between users becomes more unblocked, and thus efficiency of communications can be improved and better user experience can be obtained.

The implementations of step S11b and step S12b are not limited to the above methods. A variety of implementations of step S11b and a variety of implementations of step S12b can be combined in any manner to achieve the technical solutions of the present disclosure.

The following are embodiments of a device of the present disclosure, which can be used to perform the embodiments of the method of the present disclosure.

Fig. 9 is a block diagram showing a device for state notification according to an exemplary embodiment. The device may be implemented as entire or a part of an electrical device by using hardware, software or any combination thereof. As shown in Fig. 9, the device for state notification may include: an acquisition module 91 configured to acquire current state information about a user of a terminal; and a notification module 92 configured to notify a predetermined contact of the user of the current state information.

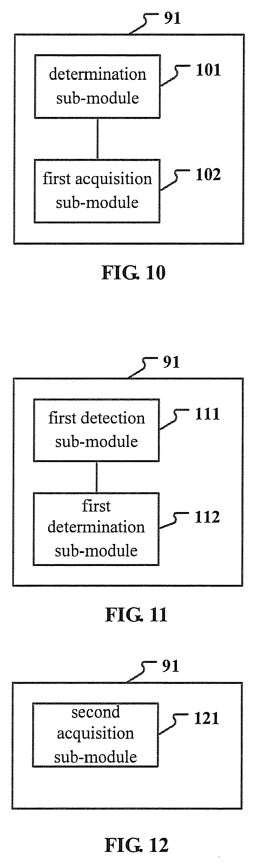

Fig. 10 is a block diagram showing an acquisition module according to an exemplary embodiment. As shown in Fig. 10, the acquisition module 91 may optionally include: a determination sub-module 101 configured to determine whether any setting for the current state information about the user exists; and a first acquisition sub-module 102 configured to acquire the current state information about the user according to a setting when the setting results exists.

Fig. 11 is a block diagram showing an acquisition module according to another exemplary embodiment. As shown in Fig. 11, the acquisition module 91 may optionally include: a first detection sub-module 111 configured to detect calendar events of the user; and a first determination sub-module 112 configured to determine the current state information about the user according to the calendar events.

Fig. 12 is a block diagram showing an acquisition module according to another exemplary embodiment. As shown in Fig. 12, the acquisition module 91 may optionally include: a second acquisition sub-module 121 configured to acquire the current state information about the user from an intelligent wearable device which is bound to the terminal.

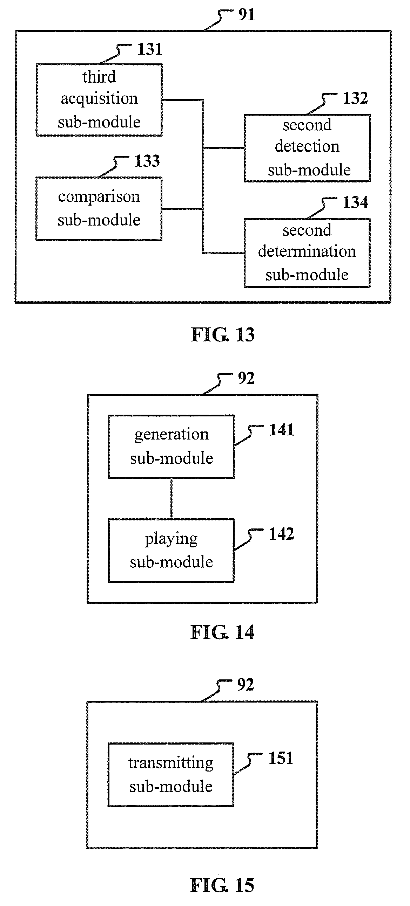

Fig. 13 is a block diagram showing an acquisition module according to another exemplary embodiment. As shown in Fig. 13, the acquisition module 91 may optionally include: a third acquisition sub-module 131 configured to acquire first current state information set by the user; a second detection sub-module 132 configured to detect calendar events of the user to determine second current state information about the user, or configured to detect the second current state information about the user from an intelligent wearable device; a comparison sub-module 133 configured to compare the second current state information with the first current state information; and a second determination sub-module 134 configured to determine the second current state information as the current state information about the user when the second current state information does not match the first current state information.

Fig. 14 is a block diagram showing a notification module according to an exemplary embodiment. As shown in Fig. 14, the notification module 92 may optionally include: a generation sub-module 141 configured to generate a ring-back tone corresponding to the current state information about the user; and a playing sub-module 142 configured to play the ring-back tone when a call from the predetermined contact is received.

In one embodiment, the generation sub-module 141 is configured to collect voice information including current state information about the user and determine the voice information as the ring-back tone corresponding to the current state information about the user.

In one embodiment, the generation sub-module 141 is configured to search a predetermined ring-back tone corresponding to the current state information about the user and determine the predetermined ring-back tone as the ring-back tone corresponding to the current state information about the user.

Fig. 15 is a block diagram showing a notification module according to another exemplary embodiment. As shown in Fig. 15, the notification module 92 may include: a transmitting sub-module 151 configured to transmit the current state information to a terminal of the predetermined contact which marks current state of the user according to the current state information.

According to a third aspect of embodiments of the present disclosure, there is provided a device for state notification, comprising: a processor; a memory for storing instructions executable by the processor; wherein the processor is configured to: acquire current state information about a user of a terminal; notify a predetermined contact of the user of the current state information.

With respect to the devices in the above embodiments, the specific manners for performing operations for individual modules therein have been described in detail in the embodiments regarding the method, which will not be elaborated herein.

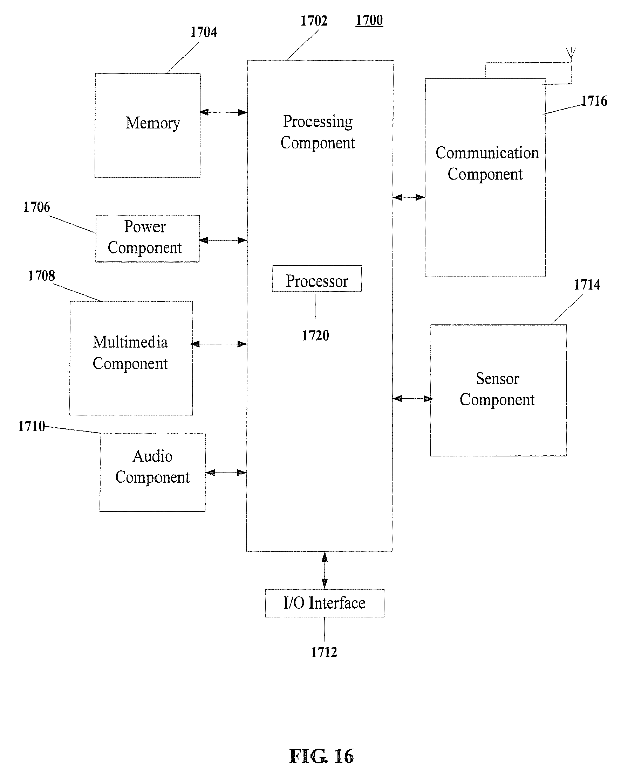

Fig. 16 is a block diagram showing an device for video control according to an exemplary embodiment. The device is suitable for a terminal device. For example, the device 1700 may be a video camera, a recording device, a mobile phone, a computer, a digital broadcast terminal, a messaging device, a gaming console, a tablet, a medical device, an exercise equipment, a personal digital assistant, and the like.

The device 1700 may include one or more of the following components: a processing component 1702, a memory 1704, a power component 1706, a multimedia component 1708, an audio component 1710, an input/output (I/O) interface 1712, a sensor component 1714, and a communication component 1716.

The processing component 1702 typically controls overall operations of the device 1700, such as the operations associated with display, telephone calls, data communications, camera operations, and recording operations. The processing component 1702 may include one or more processors 1720 to execute instructions to perform all or part of the steps in the above described methods. Moreover, the processing component 1702 may include one or more modules which facilitate the interaction between the processing component 1702 and other components. For instance, the processing component 1702 may include a multimedia module to facilitate the interaction between the multimedia component 1708 and the processing component 1702.

The memory 1704 is configured to store various types of data to support the operation of the device 1700. Examples of such data include instructions for any applications or methods operated on the device 1700, contact data, phonebook data, messages, pictures, video, etc. The memory 1704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1706 provides power to various components of the device 1700. The power component 1706 may include a power management system, one or more power sources, and any other components associated with the generation, management, and distribution of power in the device 1700.

The multimedia component 1708 includes a screen providing an output interface between the device 1700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1708 includes a front camera and/or a rear camera. The front camera and the rear camera may receive an external multimedia datum while the device 1700 is in an operation mode, such as a photographing mode or a video mode. Each of the front camera and the rear camera may be a fixed optical lens system or have focus and optical zoom capability.

The audio component 1710 is configured to output and/or input audio signals. For example, the audio component 1710 includes a microphone ("MIC") configured to receive an external audio signal when the device 1700 is in an operation mode, such as a call mode, a recording mode, and a voice recognition mode. The received audio signal may be further stored in the memory 1704 or transmitted via the communication component 1716. In some embodiments, the audio component 1710 further includes a speaker to output audio signals.

The I/O interface 1712 provides an interface between the processing component 1702 and peripheral interface modules, such as a keyboard, a click wheel, buttons, and the like. The buttons may include, but are not limited to, a home button, a volume button, a starting button, and a locking button.

The sensor component 1714 includes one or more sensors to provide status assessments of various aspects of the device 1700. For instance, the sensor component 1714 may detect an open/closed status of the device 1700, relative positioning of components, e.g., the display and the keypad, of the device 1700, a change in position of the device 1700 or a component of the device 1700, a presence or absence of user contact with the device 1700, an orientation or an acceleration/deceleration of the device 1700, and a change in temperature of the device 1700. The sensor component 1714 may include a proximity sensor configured to detect the presence of nearby objects without any physical contact. The sensor component 1714 may also include a light sensor, such as a CMOS or CCD image sensor, for use in imaging applications. In some embodiments, the sensor component 1714 may also include an accelerometer sensor, a gyroscope sensor, a magnetic sensor, a pressure sensor, or a temperature sensor.

The communication component 1716 is configured to facilitate communication, wired or wirelessly, between the device 1700 and other devices. The device 1700 can access a wireless network based on a communication standard, such as WiFi, 2G, or 3G, or a combination thereof. In one exemplary embodiment, the communication component 1716 receives a broadcast signal or broadcast associated information from an external broadcast management system via a broadcast channel. In one exemplary embodiment, the communication component 1716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1704, executable by the processor 820 in the device 1700, for performing the above-described methods. For example, the non-transitory computer-readable storage medium may be a ROM, a random access memory (RAM), a CD-ROM, a magnetic tape, a floppy disc, an optical data storage device, and the like.

A non-transitory computer-readable storage medium having stored therein instructions that, when executed by the processor of the device 1700, causes the device 1700 to perform the above described method for state notification, comprising: acquiring current state information about a user of a terminal; and notifying a predetermined contact of the user of the current state information.

In one embodiment, said acquiring the current state information comprising: determining whether any setting for the current state information about the user exists; and acquiring the current state information about the user according to a setting when the setting exists.

In one embodiment, said acquiring the current state information comprising: detecting calendar events of the user; and determining the current state information about the user according to the calendar events.

In one embodiment, said acquiring the current state information comprising: acquiring the current state information about the user from an intelligent wearable device which is bound to the terminal.

In one embodiment, said acquiring the current state information comprising: acquiring first current state information set by the user; detecting calendar events of the user to determine second current state information about the user, or detecting second current state information about the user from an intelligent wearable device; comparing the second current state information with the first current state information; and determining the second current state information as the current state information about the user when the second current state information does not match the first current state information.

In one embodiment, said notifying the current state information comprising: generating a ring-back tone corresponding to the current state information about the user; and playing the ring-back tone when a call from the predetermined contact is received.

In one embodiment, said generating the ring-back tone comprising: collectingvoice information including the current state information about the user, and determining the voice information as the ring-back tone corresponding to the current state information about the user.

In one embodiment, said generating the ring-back tone comprising: searching a predetermined ring-back tone corresponding to the current state information about the user, and determining the predetermined ring-back tone as the ring-back tone corresponding to the current state information about the user.

In one embodiment, said notifying the current state information comprising: transmitting the current state information to a terminal of the predetermined contact which marks current state of the user according to the current state information.

Other embodiments of the invention will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and embodiments be considered as exemplary only, with a true scope of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for state notification, which is applied in a terminal, **characterized in that** the method comprising:
acquiring (S11a, S11b) current state information about a user of the terminal; and
notifying (S12a, S12b) a predetermined contact of the user of the current state information.

2. The method of claim 1, wherein said step of acquiring (S11a, S11b) the current state information comprises:
determining (S21) whether any setting for the current state information about the user exists; and
acquiring (S22) the current state information about the user according to a setting when the setting exists.

3. The method of claim 1 or 2, wherein said step of acquiring (S11a, S11b) the current state information comprises:
detecting (S31) calendar events of the user; and
determining (S32) the current state information about the user according to the calendar events.

4. The method of any one of claims 1 to 3, wherein said step of acquiring (S11a, S11b) the current state information comprises:
acquiring the current state information about the user from an intelligent wearable device which is bound to the terminal.

5. The method of anyone of claims 1 to 4, wherein said step of acquiring (S11a, S11b) the current state information comprises:
acquiring (S41) first current state information set by the user;
detecting (S42) calendar events of the user to determine second current state information about the user, or detecting second current state information about the user from an intelligent wearable device;
comparing (S43) the second current state information with the first current state information; and
determining (S44) the second current state information as the current state information about the user when the second current state information does not match the first current state information.

6. The method of any one of claims 1 to 5, wherein said step of notifying (S12a, S12b) the current state information comprises:
generating (S51) a ring-back tone corresponding to the current state information about the user; and
playing (S52) the ring-back tone when a call from the predetermined contact is received.

7. The method of claim 6, wherein said step of generating (S51) the ring-back tone comprises:
collecting (S61) voice information including the current state information about the user; and
determining (S62) the voice information as the ring-back tone corresponding to the current state information about the user.

8. The method of claim 6, wherein said step of generating (S51) the ring-back tone comprises:
searching (S71) a predetermined ring-back tone corresponding to the current state information about the user; and
determining (S72) the predetermined ring-back tone as the ring-back tone corresponding to the current state information about the user.

9. The method of any one of claims 1 to 8, wherein said step of notifying (S12a, S12b) the current state information comprises:
transmitting the current state information to a terminal of the predetermined contact which marks current state of the user according to the current state information.

10. A device for state notification in a terminal, **characterized in that** the device comprising:
an acquisition module (91) configured to acquire current state information about a user of the terminal; and
a notification module (92) configured to notify a predetermined contact of the user of the current state information.

11. The device of claim 10, wherein the acquisition module (91) comprises:
a determination sub-module (101) configured to determine whether any setting for the current state information about the user exists; and
a first acquisition sub-module (102) configured to acquire the current state information about the user according to a setting when the setting exists.

12. The device of claim 10 or 11, wherein the acquisition module (91) comprises:
a first detection sub-module (111) configured to detect calendar events of the user; and
a first determination sub-module (112) configured to determine the current state information about the user according to the calendar events.

13. The device of any one of claims 10 to 12, wherein the acquisition module comprises:
a second acquisition sub-module configured to acquire the current state information about the user from an intelligent wearable device which is bound to the terminal.

14. The device of any one of claims 10 to 13, wherein the notification module comprises:
a transmitting sub-module configured to transmit the current state information to a terminal of the predetermined contact which marks current state of the user according to the current state information.

15. An device for state notification in a terminal, **characterized in that** the device comprising:
a processor (1720);
a memory (1704) for storing instructions executable by the processor (1720);
wherein the processor (1720) is configured to:
acquire current state information about a user of the terminal; and
notify a predetermined contact of the user of the current state information.
